(19) Europäisches Patentamt
European Patent Office
Office européen des brevets

(11) Veröffentlichungsnummer: **0 194 546 B1**

(12) **EUROPÄISCHE PATENTSCHRIFT**

(45) Veröffentlichungstag der Patentschrift: **11.12.91**

(51) Int. Cl.$^5$: **B01D 69/00**, B29C 59/14, C08J 7/00

(21) Anmeldenummer: **86102768.8**

(22) Anmeldetag: **03.03.86**

(54) **Porenmembranen.**

(30) Priorität: **14.03.85 DE 3509068**

(43) Veröffentlichungstag der Anmeldung:
**17.09.86 Patentblatt 86/38**

(45) Bekanntmachung des Hinweises auf die Patenterteilung:
**11.12.91 Patentblatt 91/50**

(84) Benannte Vertragsstaaten:
**DE**

(56) Entgegenhaltungen:
**EP-A- 0 072 485**
**DE-A- 2 638 065**
**DE-A- 2 703 587**
**DE-A- 2 950 236**
**DE-A- 3 220 037**

(73) Patentinhaber: **Wolff, Joachim, Dr.**
**Schlinghofener Str. 38**
**W-5068 Odenthal-Glöbusch(DE)**

Patentinhaber: **ELLINGHORST, Guido, Dr.**
**Lölsberg 102**
**W-5063 Overath(DE)**

Patentinhaber: **Steinhauser, Hermann**
**Aduchtstrasse 11**
**W-5000 Köln 1(DE)**

(72) Erfinder: **Wolff, Joachim, Dr.**
**Neuenhauser Weg 5**
**W-5060 Bergisch-Glabach 2(DE)**
Erfinder: **Koll, Jochen, D.I.**
**Am Telegraf 40**
**W-5068 Odenthal(DE)**
Erfinder: **Ellinghorst, Guido, Dr.**
**Lölsberg 102**
**W-5063 Overath(DE)**
Erfinder: **Steinhauser, Hermann**
**Aduchtstrasse 11**
**W-5000 Köln 1(DE)**

EP 0 194 546 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Porenmembranen sowie deren Verwendung zur Trennung im flüssigen Medium gelöster oder suspendierter Partikel.

Es ist bekannt, daß semipermeable Membranen zur Abtrennung ionogener Stoffe aus wäßrigen Lösungen benutzt werden. Die Realisierbarkeit dieses Trennverfahrens ist abhängig von der Art und Größe der Poren insbesondere an der Oberfläche der Membran (der eigentlichen Trennschicht) sowie Art und Molmasse der gelösten oder suspendierten Moleküle. Man unterscheidet hierbei zwischen Reverse-Osmose-Membranen (RO) die relativ dichte Membranen mit Porendurchmessern von 0,1bis 2 nm sind und niedermolekulare anorg. Salze aus wäßriger Lösung mehr als 90 % zurückhalten können und Ultrafiltrationsmembranen (Poren $\phi$ 5 nm - 1 $\mu$m) wobei das Rückhaltevermögen für derartige Salze weniger als 10 % beträgt. In der Praxis gibt es aber auch Membranen, deren Trenneigenschaften zwischen diesen Grenzbereichen liegen und die somit als UF/RO-Zwischenmembran zu bezeichnen sind.

Die Porendurchmesser liegen hierbei zwischen 2 nm und 50 nm.

Für die Ultrafiltration verwendet man vor allem asymmetrische, poröse Membranen. Asymmetrische Membranen bestehen aus einer stützenden Hauptschicht und einer lediglich auf einer Seite befindlichen Deck- bzw. Trennschicht. Im allgemeinen weist diese Trennschicht eine Dicke von 50 nm - 300 nm auf. Die Entwicklung begann auf der Basis hydrophiler Polymere (Celluloseacetat) und führte allmählich zu stärker hydrophoben Polymeren wie Polysulfon oder Polyvinylidenfluorid, welche eine höhere Temperatur- sowie Chemikalienbeständigkeit aufweisen. Herstellung von asymmetrischen Membranen aus den genannten Grundpolymeren ist Stand der Technik und erfolgt nach literaturbekannten Gießverfahren (vgl. z.B. US-A 3 615 024, US-A 4 029 582, US-A 3 556 305, US-A 3 567 810).

Anwendungsgebiete für den Einsatz von Ultrafiltrationsmembranen sind z.B.: Reinigung und Konzentrierung von Polymerlösungen und Fruchtsäften, Eiweißgewinnung aus Molkereiabwässern oder Abwasseraufbereitung. Ebenfalls Stand der Technik ist die Entsalzung und Aufkonzentrierung von Farbstofflösungen gemäß DE-A 3 148 878, DE-A 2 948 292, DE-A 2 805 891, DE-A 3 311 294 und FR-A 2 129 359 unter Verwendung bislang handelsüblicher asymmetrischer Membranen bestehend aus polyacrylnitril, Polyamid, Polysulfon, Acetylcellulose oder Polyvinylidenfluorid. Die Entsalzung von Farbstofflösungen wird dabei gewöhnlich unter erhöhtem Druck von 5 - 50 bar durchgeführt. Nachteilig wirkt sich hierbei oft ein Kompaktierungsverhalten der Membran aus, wodurch mit der Zeit eine starke Erniedrigung des Permeatflusses erfolgt.

Desweiteren weisen diese Membranen oftmals eine geringe Selektivität in ihrer Trennwirkung zwischen anorg. Salzen und z.B. gelösten Farbstoffpartikeln auf. Auch aus diesem Grunde wurden verbesserte Membranen durch chemische Modifikation gemäß DE-A 2 505 254, EP-A 25 973, EP-A 82 355, EP-A 26 399 sowie EP-A 61 424 entwickelt. Die nach EP-A 61 424 modifizierten porösen Polysulfon-Membranen (Modifizierung erfolgte entweder am Basispolymer oder bereits an bestehender asymmetrischen polysulfonmembran) enthalten im allgemeinen einen dünnen vernetzten und hydrophilen Film. Die nach EP-A 61 424 hergestellten Membranen sollen nach ihrer Modifikation eine gute Stabilität gegen Lösemittel und mechenischen Druck sowie verbesserte Rückhalteeigenschaften für organische ionische Verbindungen aufweisen. Diejenigen Beispiele, welche einen Vergleich in der Trennwirkung vor und nach der chemischen Modifikation darlegen (Bsp. 1, 8, 13, 16, 19 und 30), zeigen eindeutig, daß ein verbessertes Farbstoffrückhaltevermögen nicht mit einer Flußerhöhung zum Teil sogar mit einem Flußrückgang nach der Modifizierung korreliert. Die modifizierten Membranen weisen desweiteren häufig ein erhöhtes Rückhaltevermögen für $Na_2SO_4$ auf.

Einen dünnen vernetzten Film weisen auch die Verbundmembranen gemäß DE-A 32 20 037 auf, die dadurch erhalten werden, daß man auf ein poröse Basismembran Silane, Olefine u.a. Verbindungen in Gegenwart eines Plasmas aufpolymerisiert.

Es ist weiterhin bekannt, semipermeable, poröse, asymmetrische Membranen zum Zwecke der Verdichtung (Oberflächenpolymerisation) mit einem Plasma zu behandeln (DE-A 2 703 587). Die asymmetrische Ausgangsmembran wird dabei mit Helium im Plasma behandelt und anschließend in DMF getaucht. Es hinterbleibt ungelöst lediglich die über das Plasma vernetzte dichte Deckschicht. Hierbei handelt es sich also nicht mehr um eine asymmetrische UF-Membran, sondern um eine Diffusionsmembran, die ebenso wie andere plasmabehandelten semipermeable Membranen (vgl. DE-A 2 638 065, JP-A 1 56 224, DE-A 2 950 236) zur Reversosmose (Salzrückhaltung aus Wasser) eingesetzt werden.

Aufgabe der vorliegenden Erfindung ist nun die Entwicklung von Membranen mit z.B. verbesserter Farbstoffrückhaltung bei gleichzeitig deutlich verbesserten Durchflußeigenschaften für Lösemittel und Salze, bzw. die Bereitstellung eines Verfahrens zur nachträglichen Funktionalisierung der Oberflächen von Poren-Membranen jeglicher Form und jeglicher chemischer Zusammensetzung des membranbildenden Werkstoffes, ohne die vorgegebenen Membranstruktur und -funktion zu beeinträchtigen.

Diese Aufgabe wird durch Behandlung der Membranoberfläche mit einer Gasentladung in Gegenwart gasförmiger Stoffe gelöst, wobei die Porenstruktur verändert, insgesamt aber erhalten bleibt.

Gegenstand der Erfindung sind somit Porenmembranen mit einem an der Oberfläche mittleren Porendurchmesser > 5 nm, die durch Einwirkung von Plasma bzw. Corona-Entladung in Gegenwart gasförmigen Stoffe auf Porenmembranen erhalten werden, welche dadurch gekennzeichnet sind, daß die Gase unter den Entladungsbedingungen selbst keine polymeren Schichten bilden und die Membranen nach der Einwirkung der Plasma- oder Corona-Entladung an der Membranoberfläche einer chemischen Modifizierung mit einem mono- oder polyfunktionellen Acylierungsmittel unterworfen werden.

Bei der praktischen Durchführung des Verfahrens zur Darstellung dieser Membranen geht man beispielsweise so vor:
Die zu modifizierenden Membranen werden zunächst - falls vorhanden - von Verarbeitungs- und Herstellungshilfsmitteln, z.B. Wasser, Glyderin u.a. befreit. Dies kann z.B. durch Extraktion mit für die jeweiligen Hilfsmittel geeigneten Lösungsmitteln bei geeigneter Temperatur geschehen. Anschließend werden die gereinigten Membranen - zweckmäßigerweise unter reduziertem Druck - bis zur Gewichtskonstanz getrocknet. Der Einsatz mäßiger Wärme ($T<T_s$ (Schmelztemperatur), des/der Membranwerkstoffe) hilft diesen Arbeitsgang zu beschleunigen und gleichzeitig das Membrangefüge zu verfestigen und mechanisch zu stabilisieren (Tempereffekt).

Nach dieser Vorbehandlung wird gemäß Fig. die Membran (1) in einen Gasentladungsreaktor (2) eingebracht (z.B. evakuierbaren Rezipienten, bestehend aus einem Glaszylinder (ø = 450 mm, L = 1000 mm), der beidseitig mit Metallflanschen verschlossen wird, in denen sich isoliert, wassergekühlte Hochspannungsdurchführungen (3), die Saugleitung (4) für die Vakuumpumpe, sowie eine Durchführung für die Arbeitsgase (5) befinden).

Anschließend wird die Gasentladung bei Drücken zwischen $10^{-4}$ mbar und $10^{2}$ mbar, vorzugsweise zwischen $10^{-1}$ mbar und 1 mbar gezündet. Aber auch jeder andere Gasdruck zwischen $10^{2}$ mbar und Atmosphärendruck ist für die vorgeschlagene Gasentladung geeignet.

Die Einspeisung der elektrischen Energie in die Entladungszone erfolgt z.B. über zwei innerhalb des evakuierbaren Reaktors horizontal, planparallel übereinanderliegende Plattenelektroden (6) (z.B. in DIN A 4-Format mit einem Abstand bis zu 15 cm, vorzugsweise 7 cm). Auf einer der beiden Elektroden, vorzugsweise der unteren, wird die zu behandelnde Membran geeignet fixiert. Das Entladungsgas wird über ein Düsensystem direkt in den Elektrodenspalt dosiert. Aber auch jede andere Art der Energieeinspeisung ist möglich, wie z.B. über außenliegende Platten, Ringe oder eine Spule.

Dabei wird die Arbeitsgaszufuhr vorzugsweise während der Entladung konstant gehalten und liegt je nach gewünschtem Behandlungseffekt zwischen o und $10^{-1}$ ml (NPT) $min^{-1}$ $cm^{-3}$ bezogen auf das Entladungsraumvolumen oberhalb der Membran im Elektrodenspalt, vorzugsweise zwischen $10^{-3}$ und $10^{-2}$ ml (NTP) $min^{-1}$ $cm^{-3}$.

Der für die Zündung und Aufrechterhaltung der Gasentladung erfindungsgemäß eingesetzte Hochspannungsgenerator arbeitet im kHz-Bereich und befindet sich bei allen Arbeitsbedingungen im Resonanzfall, d.h. maximaler Energieabgabe in die Entladungszone. Seine Arbeitsfrequenz liegt je nach gewählten Entladungsparametern zwischen 10 und 100 kHz, vorzugsweise um 30 kHz. Das erfindungsgemäße Verfahren erfährt jedoch durch die Wahl der Generatorfrequenz keine Beschränkung und ist auch mit Gleichstrom-Generatoren sowie Generatoren durchführbar, die im MHz-Bereich (z.B. 13,56 MHz) oder GHz-Bereich (z.B. 2,45 GHz) arbeiten. Die Güte der Funktionalisierung (Art der chemischen Funktion, Dichte der Oberflächenbelegung) wird wesentlich durch die in der Gasentladung umgesetzte Energie pro Zeit und Membranfläche (Leistungsdichte) als auch die Gesamtenergie pro Membranfläche (Energiedichte) bestimmt. Bei dem erfindungsgemäß eingesetzten Gasentladungsreaktor liegen die Leistungsdichten in der Gasentladungszone typischerweise zwischen 2 und $10^{-2}$ $Wcm^{-2}$, vorzugsweise zwischen 1 x $10^{-1}$ und 1 $Wcm^{-2}$ bei Behandlungszeiten zwischen 1 und 10 min und resultierenden Energiedichten zwischen 6 und 600 $Wscm^{-2}$.

Als Porenmembranen kommen insbesondere asymmetrische poröse Membranen aus einer stützenden Hauptschicht und einer lediglich auf einer Seite befindlichen Deck- bzw. Trennschicht in Frage, wobei diese Trennschicht im allgemeinen eine Dicke von etwa 50 - 300 nm aufweist. Die Herstellung derartiger Membranen wird beispielsweise in folgenden US-Patentschriften beschrieben: 3 615 024, 4 029 582, 3 556 305, 3 567 810.

Unter Porenmembranen werden im Rahmen der vorliegenden Anmeldung solche verstanden, die einen Durchschnitts-Porendurchmesser von etwa 2 nm- 1 µm, vorzugsweise 2 - 50 nm aufweisen.

Die Porenmembranen bestehen beispielsweise aus organischen Polymeren wie Polyacrylnitril, Polyamid, Polysulfon, Acetylcellulose oder Polyvinylidenfluorid, metallischen Verbindungen oder Legierungen

oder anorganischen Gläsern, Vorzugsweise werden solche aus organischen Polymeren verwendet.

Derartige Polymermembranen finden für vielerlei Trennverfahren Verwendung, z.B. Reinigung und Konzentrierung von Fruchtsäften und Polymerlösungen, Eiweißgewinnung aus Molkereiabwässern, Abwasseraufbereitung und Aufkonzentrierung von Farbstofflösungen (DE-A 3 148 878, 2 948 292, 2 805 891, 3 311 294 und FR-A 2 129 359.

Als gasförmige Stoffe (Entladungsgas) kommen prinzipiell alle bei dem gewählten Arbeitsdruck in der Gasphase vorliegenden chemischen Verbindungen und Elemente in Frage. Beispielhaft seien genannt:

1. Gase, die unter den gewählten Entladungsbedingungen nur zur Aktivierung der Membranoberfläche geeignet sind. Beispiele für derartige Gase sind die Edelgase und Wasserstoff. Die derart aktivierte Oberfläche kann anschließend mit geeigneten gasförmigen, flüssigen oder gelösten Verbindungen umgesetzt und dadurch funktionalisiert werden. Als Funktionalisierungsreagenzien können alle mit Ionen oder Radikalen reagierenden Verbindungen wie Olefine, Vinylverbindungen, Heterocyclen, Carbocyclen, Halogenverbindungen, $CO_2$, $NO_x$, $O_2$, u.a. verwendet werden. So liefert z.B. die Behandlung einer Polymer-Membranoberfläche mit einer Argon-Entladung und anschließende Umsetzung mit Luft Sauerstoffunktionen, die Entladung mit Neon und anschließende Behandlung mit Vinylacetat Acetatfunktionen in der Oberfläche.

2. Gase und Dämpfe, die unter den gewählten Entladungsbedingungen mit der Membranoberfläche reagieren können, aber dabei selbst keine polymeren Schichten bilden. Beispiele für derartige Substanzen sind die Nichtmetalle sowie deren Oxide, Hydride und Halogenide wie z.B. $N_2$, $NH_3$, $O_2$, $CO_2$, $SO_2$, $H_2S$, $H_2O$, $Cl_2$, $NF_3$, $BF_3$ sowie organische Gase und Dämpfe, die unter den gewählten Entladungsbedingungen nicht zur Abscheidung einer Polymerschicht auf der Membranoberfläche führen, z.B. solche mit einem hohen Gehalt an Heteroatomen wie $H_2CO$, $CH_3OH$.

So liefert z.B. die Behandlung einer Polymer-Membranoberfläche mit einer $CO_2$-Entladung im wesentlichen Carbonyl- und Carboxylfunktionen, die Entladung mit $NH_3$ im wesentlichen Aminfunktionen in Gegenwart von $O_2$ auch Amidfunktionen.

4. Mischungen der in 1. oder 2. genannten Entladungsgase. Beispielhaft für diese Gruppe seien folgende Mischungen genannt: Benzol/$N_2$; $H_2O/CH_4$; Hexamethyldisilazan/$NH_3$; Fluor-Chlor-Kohlenwasserstoffe; $CHCl_3$/Ar; $H_2O$/Luft.

Nach erfolgter Modifizierung der Porenmembranen durch Gasentladung wird eine chemische Modifizierung (Reaktion der mittels Gasentladung eingeführten reaktiven Zentren bzw. Gruppen wie Aminogruppen oder Hydroxygruppen) durch Reaktion mit Acylierungsmitteln durchgeführt. Die entsprechenden Umsetzungen erfolgen unter üblichen Bedingungen mit geeigneten gasförmigen, flüssigen oder gelösten Verbindungen in vorzugsweise wäßrigem Medium. Bei Verwendung entsprechender polyfunktioneller Verbindungen können anschließend weitere Umsetzungen durchgeführt werden, z.B. mit Proteinen, Dispergiermittel, die Amino- oder OH-Gruppen enthalten, Amino- oder OH-haltige Kronenether, Kryptanden, Lipiden, Oligo- oder Polysacchariden.

Zur chemischen Funktionalisierung geeignete Verbindungen sind im Falle des Vorliegens von Aminogruppen insbesondere Mono- bzw. Polycarbonsäure- oder -sulfonsäurehalogenide sowie heterocyclische Verbindungen mit einem oder mehreren abspaltbaren Halogenatomen insbesondere Mono- oder Dihalogen-sym.-triazine. Ganz besonders bevorzugt sind - besonders für die Anwendung der Membranen zur Ultrafiltration von Farbstofflösungen - Reaktivfarbstoffe bzw. Vorprodukte solcher Farbstoffe wie Diazo- oder Kupplungskomponenten mit Reaktivgruppe.

Geeignete Reaktivfarbstoffe sind dabei insbesondere solche, die 1-5 wasserlöslichmachende Gruppen enthalten insbesondere Sulfogruppen und eine oder mehrere Reaktionsgruppen d. h. Gruppen, die mit den Hydroxygruppen der Cellulose oder Amidgruppen von Polyamiden unter Färbebedingungen unter Ausbildung kovalenter Bindungen reagieren.

Geeignete Reaktivgruppen sind beispielsweise solche, die mindestens einen abspaltbaren Substituenten an einen heterocyclischen Rest gebunden enthalten, beispielsweise an einen 5- oder 6-gliedrigen heterocyclischen Ring, wie einen Monazin-, Diazin-, Triazin-, z.B. Pyridin-, Pyrimidin-, Pyridazin-, Thiazin-, Oxazin- oder asymmetrischen oder symmetrischen Triazinring, oder an ein derartiges Ringsystem, welches einen oder mehrere ankondensierte Ringe aufweist, wie ein Chinolin-, Phthalazin-, Chinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können. Unter den reaktiven Substituenten am Heterocyclus sind beispielsweise zu erwähnen:

Halogen (Cl, Br oder F), Azido-($N_3$), Rhodanido, Thio, Thiolether, Oxyether.

Bevorzugt sind Reaktivfarbstoffe mit Reaktivgruppen auf Basis folgender Systeme:

Mono- oder Dihalogen-symmetrische Triazinylreste, Mono-, Di- oder Trihalogenpyrimidinylreste oder halogensubstituierte Chinoxalinylcarbonylreste.

Insbesondere bevorzugt sind Farbstoffe mit folgenden Reaktivgruppen:

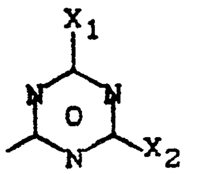

(1)

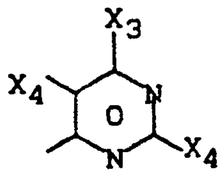

(2)

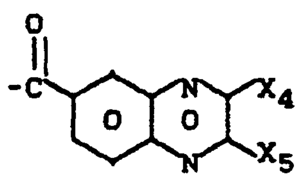

(3)

wobei in den Formel (1), (2) und (3) gilt:

$X_1$ = F
$X_2$ = Cl, F, $NH_2$, $NHR^2$, $OR^2$, $CH_2R^2$, $SR^2$
$X_3$ = Cl, F, $CH_3$
$X_4$ = Cl, F und
$X_5$ = Cl, F, $CH_3$

und wobei

$R^2$ = Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl), Aralkyl (insbesondere gegebenenfalls durch $SO_3H$, $C_1$-$C_4$-Alkyl, $C_1$-$C_4$-Alkoxy substituiertes Benzyl).

Farbstoffe, welche die obengenannten Reaktivgruppensysteme enthalten, sind beispielsweise aus folgenden Publikationen bekannt:

US-PS 3 377 336, US-PS 3 527 760, GB-PS 1 169 254, US-PS 3 669 951, DE-PS 1 644 208, GB-PS 1 188 606, DE-OS 2 817 780, ES-PS 479 771.

Unter den nicht heterocyclischen Reaktivresten sind beispielsweise zu erwähnen Vinylsulfonyl oder solche mit einem Rest $CH_2CH_2$-Z, worin Z = abspaltbare Gruppe, beispielsweise β-Chlorethylsulfonyl, β-Acetoxyethylsulfonyl, β-Sulfatoethylsulfonyl, β-Thiosulfatoethylsulfonyl sowie β-Sulfatoethylsulfonylmethylamino und Vinylsulfonylmethylamino-Grupen.

Als Reaktivfarbstoffe kommen auch solche mit zwei oder mehreren gleichen oder verschiedenen Reaktivgruppen in Frage.

Die Reaktivfarbstoffe können den verschiedensten Klassen angehören, z.B. der Reihe der metallfreien oder metallhaltigen Mono- oder Polyazofarbstoffe, metallfreien oder metallhaltigen Azaporphinfarbstoffe wie Kupfer-, Kobalt-, oder Nickelphthalocyaninfarbstoffe, der Anthrachinon-, Oxazin-, Dioxazin-, Triphenylmethan, Nitro-, Azomethin-, metallfreie oder metallhaltigen Formazanfarbstoff.

Die Umsetzung der im Plasma modifizierten Membranen mit Amin- oder Alkoholfunktionen in der Oberfläche mit einem Reaktivfarbstoff kann beispielsweise so durchgeführt werden, daß man den Reaktivfarbstoff in Wasser oder Wasser/Lösungsmittel-Gemischen beispielsweise solchen mit ε-Caprolactam oder Harnstoff löst und die Lösung auf eine durch plasmaentladung funktionalisiere Membran einwirken läßt. Anschließend wird durch Zugabe von Alkali bzw. Alkalicarbonaten der pH-Wert bevorzugt auf 8 - 12 für 1 - 10 h gehalten. Nach Spülen mit Wasser erhält man eine permanente oberflächengefärbte Membran.

Desweiteren ist es möglich, die im $NH_3$- oder $N_2$-Plasma Amin-funktionalisierte Membran nach gleicher Verfahrensweise mit reaktiver Kupplungs- (4) oder Diazotierungskomponenten (5) umzusetzen und anschließend einer Kupplungs- oder Diazotierungsreaktion zu unterwerfen:

$R\text{-}K\text{-}X_n$ (4)
$R\text{-}A\text{-}X_n$ (5)

mit

K = Rest einer Kupplungskomponente
A = Rest einer Diazokomponente
R = Reaktivrest mit oben angegebener Bedeutung
X = wasserlöslichmachende Gruppe
n = 1-5

Das Verfahren zur chemischen Funktionalisierung ist dabei unabhängig vom jeweiligen Membranwerkstoff. Es sind sowohl Membranoberflächen aus organischen Polymeren, metallischen Verbindungen und anorganischen Gläsern geeignet. Bevorzugt sind solche aus organischen Polymeren wie cellulosischen Polymeren, Polyamiden, Polyhydraziden, Polyimiden, Polysulfonen, Polyacrylnitril, Fluorpolymeren und Silikonen. Das Verfahren ist auch unabhängig von der jeweiligen Membranstruktur und somit sowohl zur Modifizierung symmetrischer als auch asymmetrischer Porenmembranen geeignet.

Die erfindungsgemäßen Membranen eignen sich für zahlreiche Anwendungen. Beispielhaft seien genannt:
Die Aufkonzentrierung (Entwässerung) stabiler Öl/Wasseremulsionen z.B. in der metallverarbeitenden Industrie.
Die Rückgewinnung von Farbstoffen aus Spülwassern der elektrophoretischen Tauchlackierung.
Die Ultrafiltration von schlichtehaltigen Abwässern der Textilindustrie. Insbesondere ist hier von Bedeutung die Rückgewinnung von Polyvinylalkohol aus Waschwasser mit Gehalten von 1%.
Die Ultrafiltration bei der Rückgewinnung von Lanolin aus Abwässern von Wollwäschereien.
Die Ultrafiltration von Latexlösungen, eingesetzt bei Beschichtung von Geweben z.B. Teppichrücken.
Die Ultrafiltration bei Aufarbeitung von Abwässern aus der Nahrungsmittelindustrie, wie sie in Molkereien, Stärkefabriken, Brauereien, Hefefabriken und in der fleisch- und fischverarbeitenden Industrie anfallen. Dabei können als wertvolle Abwasserinhaltsstoffe Proteine, Stärke oder Fette zurückgehalten werden. Hierbei von starker Bedeutung ist z.B. die Rückgewinnung von Milcheiweiß aus Molke.
Die Ultrafiltration zur Eiweißgewinnung aus Blutplasma oder z.B. Vorkonzentrierung von Hühnereiweiß.
Die Reinigung und Aufkonzentrierung von Hormonen, Enzymen und weiteren Naturstoffen.

Die erfindungsgemäßen Membranen, insbesondere solche deren Aminogruppen mit Reaktivfarbstoffen modifiziert wurden, zeigen bei der Ultrafiltration hohe Farbstoffrückhaltung bei gleichzeitig hervorragendem Permeatfluß für Lösemittel und insbesondere anorganische Salze wie NaCl oder $Na_2SO_4$. Die erfindungsgemäßen Membranen können - im Gegensatz zu bisher üblichen Membranen - trocken gelagert und anschließend ohne stärkere Veränderung der Trenneigenschaften wieder eingesetzt werden.

Die erfindungsgemäßen Membranen zeigen auch bei längerem Einsatz keine wesentliche unerwünschte Kompaktierung.

Das erfindungsgemäße Verfahren bietet ganz generell die Möglichkeit für bestimmte gewünschte Trenneffekte vorteilhafte Funktionalitäten in die Membranoberfläche einzuführen, die entweder schon für sich die Trenneigenschaften und/oder die Handhabung verbessern oder erst nach weiterer chemischer Modifizierung. Das Verfahren erlaubt es somit für das jeweilige Trennproblem maßgeschneiderte Membranen zur Verfügung zu stellen.

In den folgenden Beispielen wird der Trenneffekt folgendermaßen ermittelt:
I ≙ diejenige Menge (1) welche pro $m^2$ und Tag (d) bei angegebenem Druck (p) die Membranfläche permeiert
$\tilde{R}$ ≙ Rückhaltevermögen

$$\tilde{R} \mathrel{\hat{=}} \frac{c_1 - c_2}{c_1} \cdot 100\ \%$$

mit $C_1$ ≙ Konzentration des abzutrennenden bzw. permeierenden Stoffes in der Ausgangslösung (g/l).

$C_2$ ≙ Konzentration desgleichen Stoffes im Permeat (g/l).

Die in den folgenden Beispielen verwendeten Farbstoffe besitzen folgende Strukturen:

6

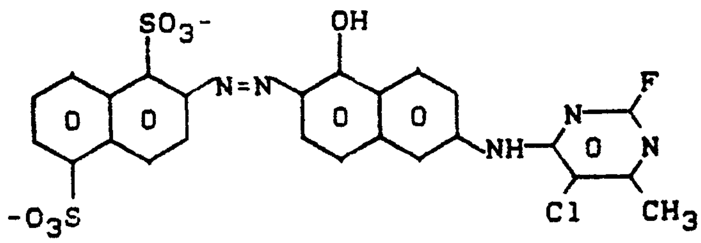

$3Na^+$

7

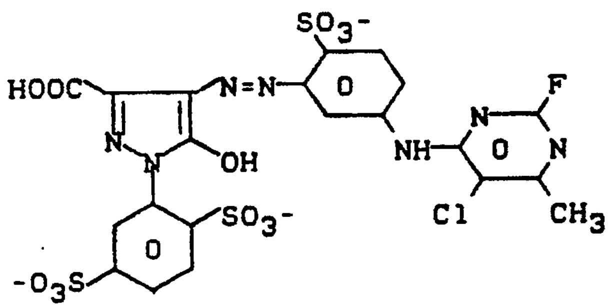

$2Na^+$
$Li^+$

8

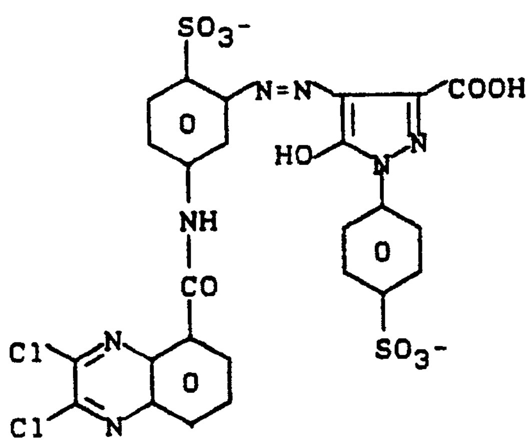

$2Na^+$

9

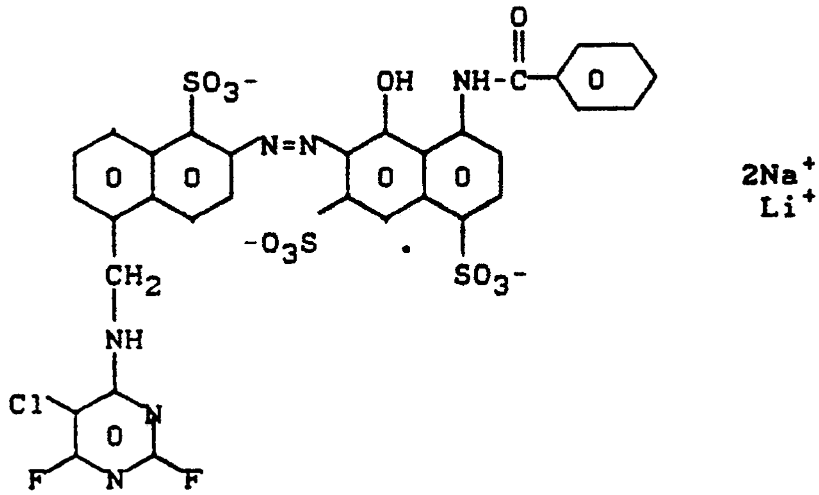

10

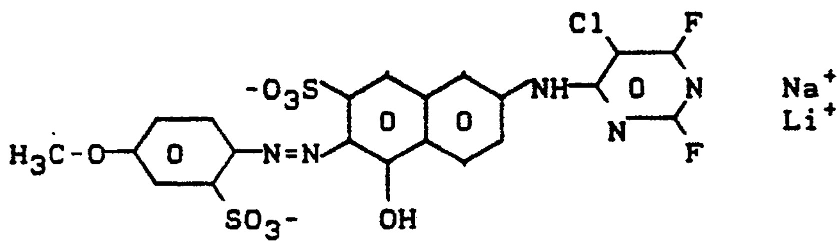

11

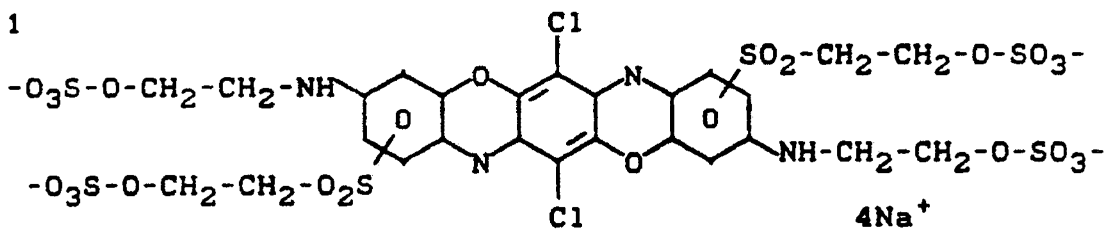

12

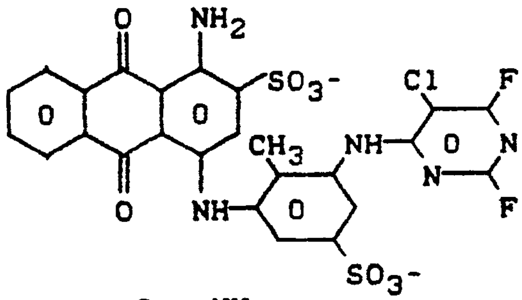

$2Na^+$

13

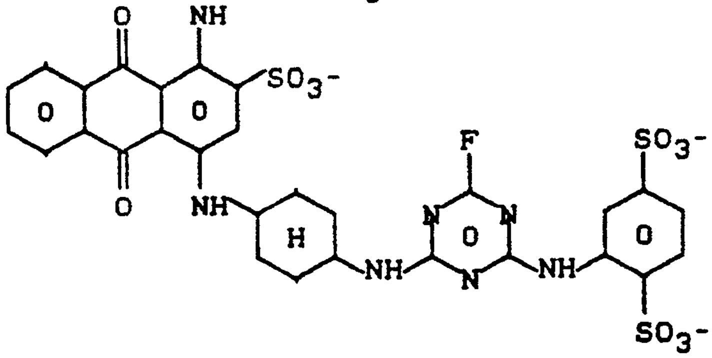

$3Na^+$

14

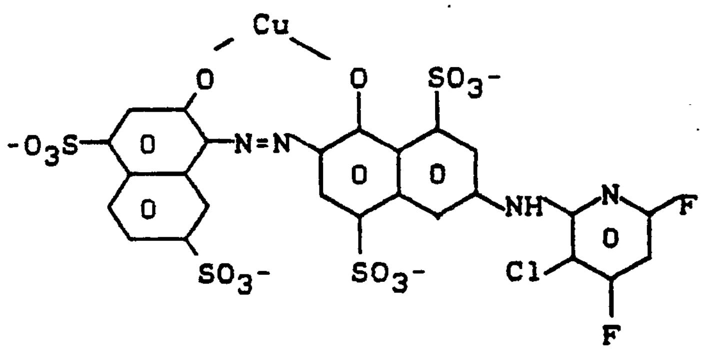

$4Na^+$

15

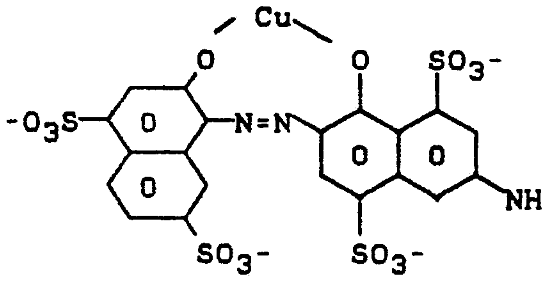

$4Na^+$

16

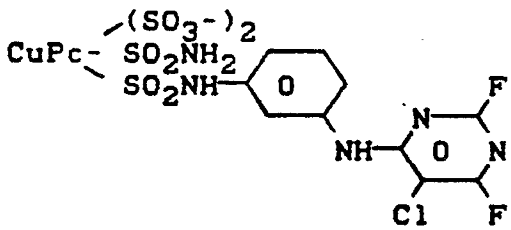

$2Na^+$

17

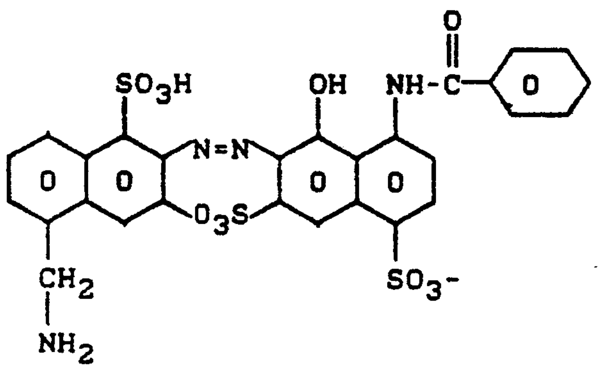

$2Na^+$
$H^+$

18

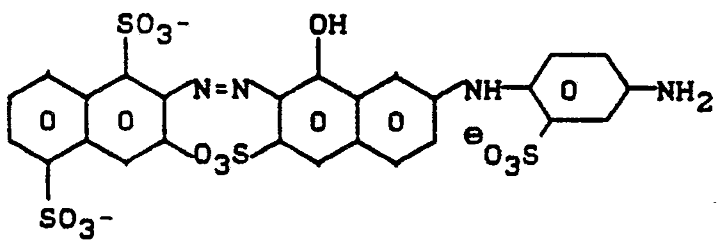

$4Na^+$

19

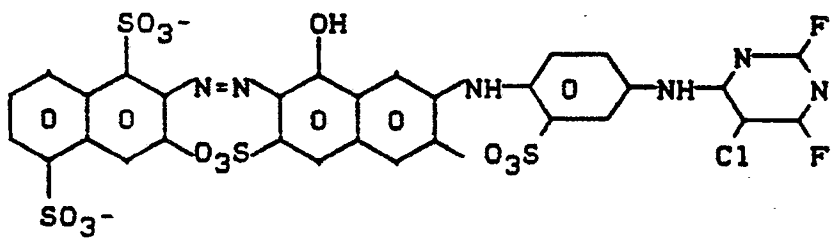

$4Na^+$

20

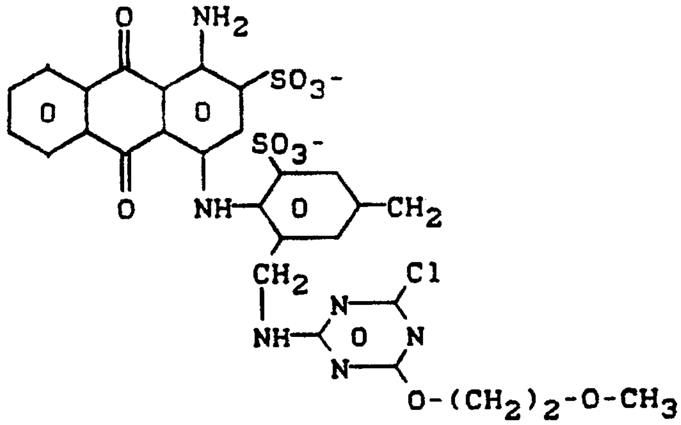

$Li^{+}$
$Na^{+}$

21

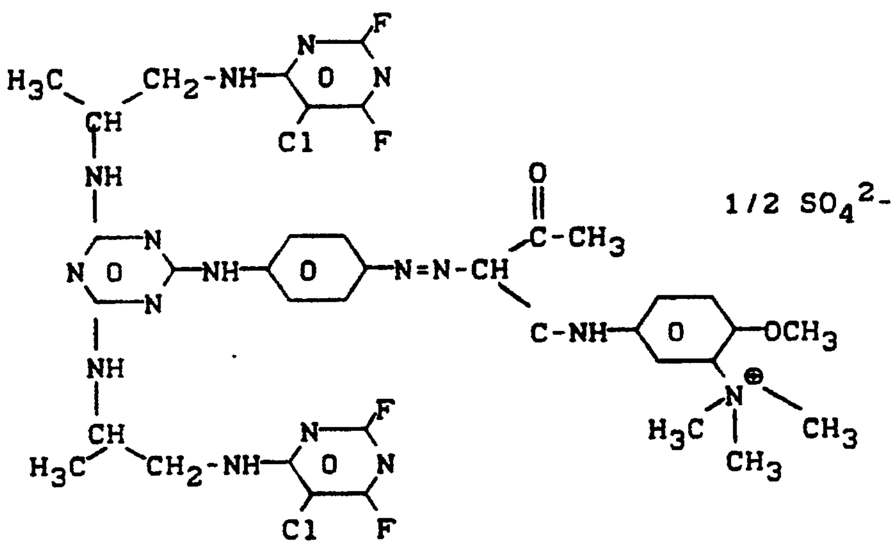

$1/2\ SO_4^{2-}$

22

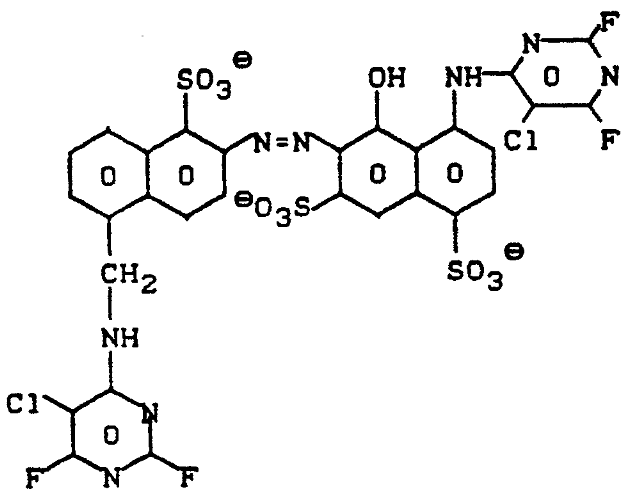

$2Na^{\oplus}/1Li^{\oplus}$

23

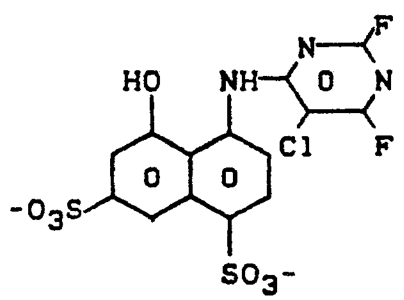

$Na^+/Li^+$

Beispiel 1

Eine handelsübliche asymmetrische Ultrafiltrations-Flachmembran aus Polysulfon (Typ DDS-GR 81 PP - 143-004) Molmassenausschlußgrenze 6000, wird zunächst von Konservierungsmitteln und Herstellungshilfsmitteln z.B. 50 % Glyzerin, 45 %$H_2O$, 4% Propionsäure, 1 % NaOH, etc. gereinigt, indem die Membran ca. 100 h in mehrfach erneuertem vollentsalztem Wasser bei 40 °C gelagert wird, Anschließend wird die Membran ca. 12 h unter reduziertem Druck (< $10^{-2}$ mbar) bei 70 °C getrocknet.

Die getrocknete Membran wird sodann in dem zuvor beschriebenen Plasmareaktor auf die untere, geerdete, auf 30 °C thermostatisierte Elektrode gelegt. Die Plasmagaszufuhr erfolgt über ein Düsensystem direkt in den Elektrodenspalt. Über ein Gasdosiersystem wird ein $NH_3$-Gasfluß von 17 ml (NTP) $min^{-1}$, entsprechend 3,9 x $10^{-3}$ ml (NTP) $min^{-1}$ $cm^{-3}$ Entladungsspaltvolumen konstant eingestellt. Der $NH_3$-Gasdruck wird über eine Druckregelsystem auf 0,6 mbar geregelt.

Sodann wird die Plasmaentladung mit Hilfe des Hockspannungsgenerators zwischen den beiden Plattenelektroden gezündet und die Membran 2,25 min bei einer Plasmaleistungsdichte von 0,29 $Wcm^{-2}$ behandelt, entsprechend einer Energiedichte von 39 $Wscm^{-2}$. Hierbei lag an der oberen Elektrode eine hochfrequente Wechselspannung von 730 V Scheitelspannung mit einer Frequenz von 32 kHz an.

Anschließend wird die Membran für 3 h in einer Lösung von 10 % $\epsilon$-Caprolactam in Wasser gequollen und nach Zugabe von 4 % salzarmem Reaktivfarbstoff (9) bei pH = 7 für weitere 12 h gelagert. Durch Zugabe von $Na_2CO_3$ wird der pH-Wert auf 10 gestellt und für 5 h auf 40 °C erhitzt. Nach beendeter Reaktion wird mit Edelwasser neutral gespült.

Beispiel 2

Gemäß Beispiel 1 wird eine asymmetrische Ultrafiltrations-Flachmembran aus Polysulfon einer $NH_3$-Plasmaentladung ausgesetzt mit dem Unterschied zu Beispiel 1, daß die Membran 4 min bei einer Plasmaleistungsdichte von 0,2 $Wcm^{-2}$ behandelt wird, entsprechend einer Energiedichte von 48 $Wscm^{-2}$. Hierbei lag an der oberen Elektrode eine hochfrequente Wechselspannung von 640 V Scheitelspannung mit einer Freuquenz von 39 kHz an. Die chemische Modifizierung entspricht Beispiel 1.

In der folgenden Tabelle 1 sind Permeatfluß und Rückhaltevermögen der an der Oberfläche tiefrot gefärbten Membranen aus Beispiel 1 und 2 im Vergleich mit der unbehandelten Membran angegeben. Die angegebene Reihenfolge entspricht der chronologischen Abfolge der Experimente und zeigt die verbesserte Langzeitstabilität der modifizierten Membranen.

**Tabelle 1**

Permeatfluß und Rückhaltevermögen der Membranen aus Beispiel 1 und 2 (DDS-GR-81 PP/$NH_3$-Plasma/Farbstoff (9))

| gelöste Verbindung in $H_2O$ incl. 1 % NaCl | Konz. % | Permeatfluß I [$l/m^2d$] GR81PP | Bsp. 1 | Bsp. 2 | Rückhaltevermögen [%] GR81PP | Bsp. 1 | Bsp. 2 |
|---|---|---|---|---|---|---|---|
| Wasser(+) | | 3600 | 6400 | 11000 | | | |
| Farbstoff 7 | 3 | 1260 | 1550 | 1750 | 90 | 87 | 87 |
| Farbstoff 6 (ohne Salz) | 17 | 630 | 420 | 580 | 96,7 | 99,6 | 98,9 |
| Farbstoff 14 | 3,79 | 630 | 550 | 620 | 91,7 | 99,2 | 99,2 |
| Farbstoff 12 | 2,65 | 1000 | 2000 | 2400 | 97,3 | 99,3 | 99,5 |
| Farbstoff 9 | 2,5 | 440 | 1100 | 1100 | 97,4 | 99,3 | 99,5 |
| Farbstoff 13 | 4,18 | 420 | 1500 | 1600 | 98,3 | 99,5 | 99,6 |
| Farbstoff 10 | 3,5 | 570 | 1070 | 620 | 98,1 | 99,5 | 99,5 |
| Farbstoff 11 | 2,66 | 290 | 1600 | 1700 | 98,8 | 99,6 | 99,6 |
| Farbstoff 18 | 10,28 | 296 | 1455 | 1550 | 91,25 | 94,9 | 95,6 |

Ultrafiltation bei 40 bar und 20°C;

(+) Wasserfluß bei 20 bar; Membranen vorher 5 h bei 40 bar mit Farbstoff 9 in Betrieb.

Inwieweit sich eine Verbesserung von 2% im Farbstoffrückhaltevermögen bei Entsalzung auf < 0,2 % NaCl auf die Effizienz der Ultrafiltration auswirkt, soll nachfolgende Rechnung am Beispiel Farbstoff 12 aus Tabelle 1 zeigen. Eine wäßrige Lösung mit 15 % Reaktivfarbstoff (12), 15 % $\epsilon$-Caprolactam und 3 % Dicyandiamid, ist nur lagerstabil bei einem Restsalzgehalt unter 0,3 %.

1000 kg Lösung, enthaltend 1 % NaCl und 26,5 kg Reaktivfarbstoff (12), werden kontinuierlich mit 3000

kg Reinstwasser diafiltriert. Dies ergibt
2,15 kg Verlust bei R = 97,3 % (Vergleich) und
0,4 kg Verlust bei R = 99,5 % (Membran Bsp. 2)
Zur Herstellung der konzentrierten Flüssigmarke wird auf 15 % Farbstoff (12), entsprechend 174 kg Lösung, aufkonzentriert: dabei ergibt sich 0,62 kg Verlust bei der Vergleichsmembran und 0,11 kg Verlust bei Membran Bsp. 2.

| | | |
|---|---|---|
| **Gesamtverlust an Farbstoff (12):** | **2,77 kg = 10,4 %** | **bei der Vergleichsmembran** |
| | **0,51 kg = 1,9 %** | **bei der erfindungsgemäßen Membran Bsp. 2** |

Man erkennt, daß schon eine Verbesserung des Rückhaltevermögens der Membran von 97,3 % auf 99,5 % zu einer erheblichen Reduzierung (bei völliger Entsalzung) des Gesamtverlustes von 10,4 % Farbstoff (12) auf lediglich 1,9 % führt.

Beispiel 3

Gemäß Beispiel 1 wird eine asymmetrische Ultrafiltrations-Flachmembran aus Polysulfon einer $NH_3$-Plasmaentladung ausgesetzt mit dem Unterschied zu Beispiel 1, daß die Membran 2 min bei einer Plasmaleistungsdichte von 0,34 $Wcm^{-2}$ entsprechend einer Energiedichte von 41 $Wscm^{-2}$, und einem $NH_3$-Gasfluß von 34 ml (NTP) $min^{-1}$ $cm^{-3}$, entsprechend 7,8 x $10^{-3}$ ml (NTP) $min^{-1}$ $cm^{-3}$, Entladungsspaltvolumen behandelt wird. Hierbei lag an der oberen Elektrode eine hochfrequente Wechselspannung von 775 V Scheitelspannung mit einer Frequenz von 32 kHz an. Die chemische Modifikation entspricht Beispiel 1.

Beispiel 4

Gemäß Beispiel 1 wird eine asymmetrische Ultrafiltrations-Flachmembran aus Polysulfon einer $NH_3$-Plasmaentladung ausgesetzt mit dem Unterschied zu Beispiel 1, daß die Membran 6,6 min bei einer Plasmaleistungsdichte von 0,2 $Wcm^{-2}$, entsprechend einer Energiedichte von 79 $Wscm^{-2}$, und einem $NH_3$-Gasfluß von 34 ml (NTP) $min^{-1}$, entsprechend 7,8 x $10^{-3}$ ml (NTP) $min^{-1}$ $cm^{-3}$ Entladungsspaltvolumen behandelt wird. Hierbei lag an der oberen Elektrode eine hochfrequente Wechselspannung von 670 V Scheitelspannung mit einer Frequenz von 41 kHz an. Die chemische Modifikation entspricht Beispiel 1.

In Tabelle 2 sind Durchfluß und Rückhaltevermögen der an der Oberfläche tiefrot gefärbten Membranen aus Beispiel 3 und 4 im Vergleich mit der unbehandelten Membran dargelegt.

**Tabelle 2**

**Permeatfluß und Rückhaltevermögen der Membranen aus Beispiel 3 und 4 (DDS-GR-81PP/$NH_3$-Plasma/Farbstoff 9)**

| gelöste Verbindung in $H_2O$ | Konz. (%) | Permeatfluß I [$l.m^{-2}d^{-1}$] GR81PP | Bsp. 3 | Bsp. 4 | Rückhaltevermögen [%] GR81PP | Bsp. 3 | Bsp. 4 |
|---|---|---|---|---|---|---|---|
| Wasser* | | 1600 | 2200 | 16000 | | | |
| Farbstoff 14 pH = 8 | 3,79 | 630 | 695 | 695 | 91,7 | 98,2 | 98,2 |
| Farbstoff 7 pH = 7 | 3 | 1260 | 1140 | 2300 | 90 | 92,8 | 87,5 |
| Farbstoff 12 pH = 8 | 2,65 | 1100 | 1200 | 2670 | 97,3 | 98,5 | 98,9 |

Ultrafiltration bei 20°C und 40 bar; *Permeatfluß bei 20 bar, nachdem Membran für 5 h bei 40 bar mit Farbstoff 9 in Betrieb war.

Beispiel 5

Gemäß Beispiel 1 wird eine asymmetrische Ultrafiltrations-Flachmembran aus Polysulfon einer $NH_3$-Plasmaentladung ausgesetzt mit dem Unterschied zu Beispiel 1, daß es sich um eine UF-Membran der Fa.

Kalle handelt, Typ Nadir TU-AO-4045.425T670, mit einer Molmassenausschlußgrenze von 60000, die 2,25 min bei einer Plasmaleistungsdichte von 0,28 $Wcm^{-2}$, entsprechend einer Energiedichte von 38 $Wscm^{-2}$ behandelt wird. Hierbei lag an der oberen Elektrode eine hochfrequente Wechselspannung von 730 V Scheitelspannung mit einer Frequenz von 32 kHz an.

Die Membran wird analog Beispiel 1 mit dem Reaktivfarbstoff 9 an der Oberfläche umgesetzt. Tabelle 3 gibt im Vergleich zur hilfsmittelfrei-gewaschenen, getrockneten und nicht Plasma-behandelten Membran den Durchfluß wieder.

**Tabelle 3**

Permeatfluß und Kompaktierungsstabilität der Membran aus Beispiel 5 (Nadir/$NH_3$-Plasma/Farbstoff 9)

| gelöste Verbindung | Konz. (%) | Permeatfluß I [$l.m^{-2}d^{-1}$] Membran getrocknet * | Membran Bsp. 5 | |
|---|---|---|---|---|
| Wasser 10 bar (vor Farbstofftrennung) | - | 882 | 3000 | T = 20° C |
| Farbstoff 13; 40 bar | 2,5 | 100 | 222 | |
| Wasser 10 bar (nach Farbstofftrennugn) | - | 470 | 2700 | Lösungen enthalten 1 % NaCl |

* Membran mit $H_2O$ extrahiert und vakuum-getrocknet.

Beispiel 5a

Eine gemäß Beispiel 2 im Plasma behandelte Membran wird für 3 h in einer Lösung von 10 % ε-Caprolactam in Wasser gequollen. Nach Zusatz von 4 % salzarmem Reaktivfarbstoff der Formel 10 wird für

weitere 12 h bei pH = 7 gelagert. Durch Zugabe von NaOH auf pH = 10 bei 50 °C fixiert der Reaktivfarbstoff auf der Membranoberfläche. Auch nach mehrmaligem Spülen mit Wasser unter Druck hinterbleibt eine scharlach-gefärbte Trennschicht.

**Tabelle 4**

Permeatfluß und Rückhaltevermögen der Membranen aus Beispiel 2 und 5a
($GR-81PP/NH_3$-Plasma/Farbstoff 9, 10)

| gelöste Verbindung | Konz. (%) | Permeatfluß I [$l.m^{-2}d^{-1}$] GR 81 PP | Bsp. 2 | Bsp. 5a | Rückhaltevermögen [%] GR 81 PP | Bsp. 2 | Bsp. 5a |
|---|---|---|---|---|---|---|---|
| + Wasser/10 bar | | 2000 | 6000 | 19200 | | | |
| Farbstoff 13<br>pH = 7,5; 40 bar | 4,18 | 420 | 1600 | 1715 | 98,3 | 99,5 | 98,9 |
| Farbstoff 10<br>pH = 6,5; 40 bar | 3,5 | 570 | 620 | 615 | 98,1 | 99,5 | 99,5 |
| Farbstoff 11<br>pH = 4,5; 40 bar | 2,66 | 290 | 1700 | 2300 | 98,8 | 99,6 | 99,2 |

| gelöste Verbindung | Konz. (%) | Permeatfluß I [l.m$^{-2}$d$^{-1}$] GR 81 PP | Bsp. 2 | Bsp. 5a | Rückhaltevermögen [%] GR 81 PP | Bsp.2 | Bsp.5a |
|---|---|---|---|---|---|---|---|
| Salzrückhalt in Gegenwart von Farbstoff (13)x | | | | | | | |
| Farbstoff 9 | 2,5 | | | | 93 | 95 | 94,2 |
| + $Na_2SO_4$/20 bar | 0,7 | 387 | 1000 | 870 | 37 | 45 | 44 |
| + NaCl/T = 20°C | 0,5 | | | | 8 | 12 | 12 |
| Farbstoff 9 | 2,5 | | | | 97,3 | 98,3 | 98,7 |
| + $Na_2SO_4$/40bar | 0,7 | 550 | 930 | 784 | 68,6 | 71,4 | 68,6 |
| + NaCl/T = 20°C | 0,5 | | | | 34 | 40 | 34,2 |

Beispiel 6

Gemäß Beispiel 1 wird eine asymmetrische Ultrafiltrations-Flachmembran aus Polysulfon einer $NH_3$-Plasmaentladung ausgesetzt mit dem Unterschied zu Beispiel 1, daß die Membran eine Molmassenausschlußgrenze von 20000 besaß (Typ DDS-GR 61 PP-350-001) und 2 min bei einer Plasmaleistungsdichte von 0,35 $Wcm^{-2}$, entsprechend einer Energiedichte von 42 $Wscm^{-2}$, behandelt wird. Hierbei lag an der oberen Elektrode eine hochfrequente Wechselspannung von 770 V Scheitelspannung mit einer Frequenz von 33 kHz an. Die chemische Modifikation entspricht Beispiel 1. Die Durchfluß/Rückhalteeigenschaften sind in Tabelle 5 bis 6 dargelegt.

Beispiel 7

Gemäß Beispiel 6 wird eine asymmetrische Ultrafiltratons-Flachmembran aus Polysulfon (Typ DDS GR 61 PP) einer $NH_3$-Plasmaentladung ausgesetzt. Anschließend wird die Membran für 3 h in einer Lösung von 10 % $\eta$-Caprolactam in Wasser vorgequollen, 4 % salzarmer Reaktivfarbstoff (16) zugesetzt und bei pH = 7 für weitere 12 h gelagert. Durch Zugabe von NaOH wird der pH-Wert auf 9,5 gestellt und die Lösung für 5 h auf 40 °C erhitzt. Nach beendeter Reaktion wird mit Edelwasser neutral gespült. Man erhält eine an der Oberfläche intensiv türkisfarbene Membran, deren Durchfluß/Rückhalteeigenschaften in Tabelle 5 bis 6 dargestellt werden.

Beispiel 8

Gemäß Beispiel 7 wird eine mit $NH_3$-Plasmaentladung behandelte Membran nach gleicher Rezeptur mit Farbstoff (21) Oberflächen-gefärbt.

Tabelle 5

| Wasserfluß der Membranen aus Beispiel 6, 7 und 8 (GR61PP) $NH_3$-Plasma/Farbstoff 9, 16, 21 (nach 1 h Laufzeit bei 40 bar und 25 °C) | | | |
|---|---|---|---|
| | I ($1m^{-2}d^{-1}$) bei | | |
| Membran Beispiel | 5 bar | 10 bar | 20 bar |
| GR 61 PP | 1400 | 2580 | 4210 |
| Modif. Bsp. 6 | 2000 | 3600 | 6315 |
| Modif. Bsp. 7 | 2400 | 4000 | 6315 |
| Modif. Bsp. 8 | 6400 | 10700 | 18450 |

<u>Tabelle 6</u>

Permeatfluß und Rückhaltevermögen der Membranen aus Beispiel 7 und 8 (GR61PP/$NH_3$-Plasma/Farbstoff 16, 21)

| gelöste Verbindung | Konz. | I ($lm^{-2}d^{-1}$) | | | R (%) | | |
|---|---|---|---|---|---|---|---|
| | | GR61PP | Bsp. 7 | Bsp. 8 | GR61PP | Bsp. 7 | Bsp. 8 |
| Farbstoff 20 | 2,76 | 3640 | 2665 | 3245 | 89,86 | 94,78 | 97,34 |
| Farbstoff 19 | 2,78 | 1667 | 1290 | 1480 | 96,3 | 98,4 | 98,6 |
| Farbstoff 16 | 2,65 | 2285 | 2000 | 2285 | 99,90 | 99,96 | 99,97 |

p = 40 bar, T = 25°C

Lösungen enthalten 1 % NaCl

<u>Beispiel 9</u>

Gemäß Beispiel 1 wird eine asymmetrische Ultrafiltrations-Flachmembran aus Polysulfon der Fa. DDS GR 61 PP mit einem Cut off von 20000 einer $NH_3$-Plasmaentladung ausgesetzt, mit dem Unterschied zu

Beispiel 1, daß die Membran 4 min bei einer Plasmaleitstungsdichte von 0,2 $Wcm^{-2}$ behandelt wird, entsprechend einer Energiedichte von 48 $Wscm^{-2}$. Hierbei lag an der oberen Elektrode eine hochfrequente Wechselspannung von 640 V Scheitelspannung mit einer Frequenz von 39 kHz an. Die Färbung der Oberfläche erfolgt nach Rezeptur Beispiel 7 mit Farbstoff (20).

Beispiel 10

Eine nach Beispiel 9 behandelte Polysulfonmembran DDS GR 61 PP wird mit Farbstoff (22) gefärbt.

Beispiel 11

Die Oberfläche einer nach Beispiel 9 einer $NH_3$-Plasmaentladung ausgesetzten Polysulfonmembran GR 61 PP wird nach Vorschrift Beispiel 7 mit einer 4 %igen Lösung der Verbindung (23) umgesetzt.

Tabelle 7

| Wasserfluß der Membranen aus Beispiel 9, 10 und 11 (GR61PP/$NH_3$-Plasma/Farbstoff 20, 22, 23) nach 1 h Laufzeit bei 40 bar und 25° C | | | |
|---|---|---|---|
| | I ($1m^{-2}d^{-1}$) bei | | |
| Membran Beispiel | 5 bar | 10 bar | 20 bar |
| GR 61 PP | 1450 | 2580 | 4210 |
| Modif. Bsp. 9 | 6670 | 12000 | 20870 |
| Modif. Bsp. 10 | 7400 | 13720 | 26000 |
| Modif. Bsp. 11 | 8570 | 16000 | 26670 |

Beispiel 12

Gemäß Beispiel 1 wird eine asymmetrische Ultrafiltrations-Flachmembran aus Polysulfon einer Plasmaentladung ausgesetzt mit dem Unterschied zu Beispiel 1, daß als Plasmagas Hexamethyldisilazan (HMDSZ) verwendet wird und die Membran 0,5 min bei einer Plasmaleistungsdichte von 0,25 $Wcm^{-2}$, entsprechend einer Energiedichte von 7,5 $Wscm^{-2}$, bei einem HMDSZ-Gasfluß von 5 ml (NTP) $min^{-1}$, entsprechend 1,2 x $10^{-3}$ ml (NTP) $min^{-1}$ $cm^{-3}$ Entladungsvolumen, und einem Gasdruck von 0,3 mbar behandelt wird. Hierbei lag an der oberen Elektrode eine hochfrequente Wechselspannung von 780 V Scheitelspannung mit einer Frequenz von 42 kHz an. Die chemische Modifizierung mit Farbstoff (16) erfolgt gemäß Beispiel 7.

Beispiel 13

Gemäß Beispiel 1 wird eine asymmetrische Ultrafiltrations-Flachmembran aus Polysulfon einer Plasmaentladung ausgesetzt mit dem Unterschied zu Beispiel 1, daß als Plasmagas ein Gemisch aus Chloroform ($CHCl_3$) in Stickstoff ($N_2$) ($N_2$ bei 30° C gesättigt mit $CHCl_3$) verwendet wird und die Membran 2 min bei einer Plasmaleistungsdichte von 0,24 $Wcm^{-2}$, bei einem $CHCl_3/N_2$-Gasfluß von 50 ml (NTP) $min^{-1}$, entsprechend 12 x $10^{-3}$ ml (NTP) $min^{-1}$ $cm^{-3}$ Entladungsvolumen, behandelt wird. Hierbei lag an der oberen Elektrode eine hochfrequente Wechselspannung von 710 V Scheitelspannung und einer Frequenz von 40 kHz an.

Beispiel 14

Gemäß Beispiel 1 wird eine asymmetrische Ultrafiltrations-Flachmembran aus Polysulfon einer Plasmaentladung ausgesetzt mit dem Unterschied zu Beispiel 1, daß als Plasmagas ein Gemisch aus Wasser ($H_2O$) in Luft (Luft bei 30° C gesättigt mit $H_2O$) verwendet wird und die Membran 2 min bei einer Plasmaleistungsdichte von 0,23 $Wcm^{-2}$, entsprechend einer Energiedichte von 28 $Wscm^{-2}$, bei einem $H_2O$/Luft-Gasfluß von 50 ml (NTP) $min^{-1}$, entsprechend 12 x $10^{-3}$ ml (NTP) $min^{-1}$ $cm^{-3}$ Entladungsspaltvolumen, behandelt wird. Hierbei lag an der oberen Elektrode eine hochfrequente Wechselspannung von 710 V Scheitelspannung und einer Frequenz von 43 kHz an. Die chemische Modifizierung erfolgt mit Farbstoff (16) gemäß Beispiel 7.

Beispiel 15

Gemäß Beispiel 1 wird eine asymmtrische Ultrafiltrations-Flachmembran aus Polysulfon einer Plasmaentladung ausgesetzt mit dem Unterschied zu Beispiel 1, daß als Plasmagas ein Gemisch aus Hexamethyldisilazan (HMDSZ) in Ammoniak ($NH_3$) ($NH_3$ bei 30°C gesättigt mit HMDSZ) verwendet wird und die Membran 2 min bei einer Plasmaleistungsdichte von 0,2 $Wcm^{-2}$, entsprechend einer Energiedichte von 24 $Wscm^{-2}$, bei einem HMDSZ/$NH_3$-Gasfluß von 17 ml (NTP) $min^{-1}$, entsprechend 3,9 x $10^{-3}$ ml (NTP) $min^{-1}$ $cm^{-3}$ Entladungsspaltvolumen, behandelt wird. Hierbei lag an der oberen Elektrode eine hochfrequente Wechselspannung von 860 V Scheitelspannung und einer Frequenz von 37 kHz an. Die chemische Modifizierung erfolgt mit Farbstoff (16) gemäß Beispiel 7.

**Tabelle 8**

**Permeatfluß und Rückhaltevermögen der Membranen Beispiel 13, 14 (GR81PP/$CHCl_3$+$N_2$-, $H_2O$ + Luft-Plasma/Farbstoff 16)**

| gelöste Verbindung | Konz. [%] | I ($lm^{-2}d^{-1}$) GR81PP | Bsp.13 | 14 | Rückhaltevermögen [%] GR81PP | Bsp.13 | 14 |
|---|---|---|---|---|---|---|---|
| NaCl/10bar | 5 | 3070 | 720 | 10000 | 1,6 | 3 | 0,3 |
| Farbstoff 6 40 bar | 1,93 | 2700 | 1600 | 2400 | 98,9 | 99,2 | 99,8 |

Beispiel 16

Gemäß Beispiel 1 wird eine asymmetrische Ultrafiltrations-Flachmembran aus Polysulfon einer Plasmaentladung ausgesetzt mit dem Unterschied zu Beispiel 1, daß als Plasmagas Frigen 22 ($CHClF_2$) verwendet wird und die Membran 0,5 min bei einer Plasmaleistungsdichte von 0,15 $Wcm^{-2}$, entsprechend einer Energiedichte von 4,5 $Wscm^{-2}$ bei einem Frigen 22-Gasfluß von 11 ml (NTP) $min^{-1}$, entsprechend 2,5 x $10^{-3}$ ml (NTP) $min^{-1}$ $cm^{-3}$ Entladungsspaltvolumen und einem Gasdruck von 0,2 mbar behandelt wird. Hierbei lag an der oberen Elektrode eine hochfrequente Wechselspannung von 810 V Scheitelspannung und einer Frequenz von 52 kHz an.

Beispiel 17

Gemäß Beispiel 1 wird eine asymmetrische Ultrafiltrations-Flachmembran aus Polysulfon einer Plasmaentladung ausgesetzt mit dem Unterschied zu Beispiel 1, daß als Plasmagas Krypton verwendet wird und die Membran 2,5 min bei einer Plasmaleistungsdichte von 0,11 $Wcm^{-2}$, entsprechend einer Energiedichte von 16,5 $Wscm^{-2}$, bei einem Krypton-Gasfluß von 37 ml (NTP) $min^{-1}$, entsprechend 8,6 x $10^{-3}$ ml (NTP) $min^{-1}$ $cm^{-3}$ Entladungsspaltvolumen behandelt wird. Hierbei lag an der oberen Elektrode eine hochfrequente Wecheselspannung von 590 V Scheitelspannung mit einer Frequenz von 28 kHz an. Die Membran wurde anschließend dem Luftsauerstoff ausgesetzt.

Beispiel 18

Gemäß Beispiel 1 wird eine asymmetrische Ultrafiltrations-Flachmembran aus Polysulfon einer $NH_3$-Plasmaentladung ausgesetzt mit dem Unterschied zu Beispiel 1, daß die Membran eine Molmassenausschlußgrenze von 3.000 besaß (Typ DDS-GR 90 PP) und 2,5 min bei einer Plasmaleistungsdichte von 0,24 $Wcm^{-2}$, entsprechend einer Energiedichte von 36 $Wscm^{-2}$, behandelt wird. Hierbei lag an der oberen Elektrode eine hochfrequente Wechselspannung von 750 V Scheitelspannung mit einer Frequenz von 29 kHz an. Die chemische Modifizierung erfolgt mit Farbstoff (16) gemäß Beispiel 7.

Beispiel 19

Eine nach Beispiel 18 über Plasmaentladung modifizierte Membran Typ DDS GR 90 PP wird anschließend mit Farbstoff (12) unter den in Beispiel 7 aufgeführten Reaktionsbedingungen umgesetzt.

Beispiel 20

Eine gemäß Beispiel 1 über Plasmaentladung modifizierte Membran Typ DDS GR 81 PP wird in einer 4%igen wässrigen Lösung der Kupplungskomponente der Formel

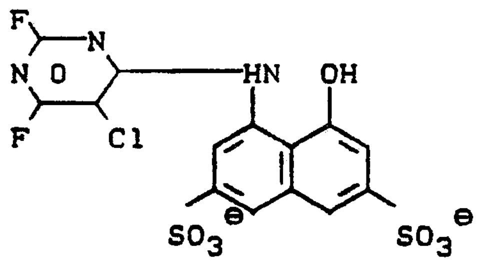

für 24 Stunden gequollen. Anschließend wird 5 Std. auf 50 °C erwärmt und mit Soda auf pH 9 gestellt und gespült. Die so behandelte Membran wird 1 Stunde in einer 4 %igen wässrige Lösung von diazotierter Orthanilsäure gelegt und anschließend ein Kupplungs-pH von 7 eingestellt. Nach 10 Minuten wird gespült. Die Membran zeigt ähnlich gute Eigenschaften wie sie in den obigen Beispielen beschrieben sind.

**Patentansprüche**

1. Porenmembranen mit einem an der Oberfläche mittleren Porendurchmesser > 5 nm, die durch Einwirkung von Plasma- bzw. Corona-Entladung in Gegenwart gasförmiger Stoffe auf Porenmembranen erhalten werden, dadurch gekennzeichnet, daß die Gase unter den Entladungsbedingungen selbst keine polymeren Schichten bilden und die Membranen nach der Einwirkung der Plasma- oder Corona-Entladung an der Membranoberfläche einer chemischen Modifizierung mit einem mono- oder polyfunktionellen Acylierungsmittel unterworfen werden.

2. Porenmembranen gemäß Anspruch 1, dadurch gekennzeichnet, daß die Gase Nichtmetalloxide, Nichtmetallhydride und Nichtmetallhalogenide sind.

3. Porenmembranen gemäß Anspruch 1, dadurch gekennzeichnet, daß die Plasma- bzw. Corona-Entladung in Gegenwart von $NH_3$ durchgeführt wird.

4. Porenmembran gemäß Anspruch 1, dadurch gekennzeichnet, daß die als Ausgangsmaterial verwendete und zu behandelnde Porenmembran unmittelbar in der Plasmaentladungszone, vorzugsweise zwischen den Elektroden angebracht ist.

5. Porenmembran gemäß Anspruch 1, dadurch gekennzeichnet, daß als Acylierungsmittel ein wasserlöslicher Reaktivfarbstoff verwendet wird.

6. Porenmembranen gemäß Anspruch 1 oder 5, dadurch gekennzeichnet, daß als Acylierungsmittel mono- oder polyfunktionelle Carbonsäure- oder Sulfonsäurehalogenide oder aromatisch-heterocyclische Halogenverbindungen mit mindestens einem gegenüber Aminogruppen reaktionsfähigen Halogenatom verwendet werden.

7. Porenmembranen gemäß Anspruch 1 oder 5, dadurch gekennzeichnet, daß als Acylierungsmittel ein Reaktivfabstoff mit einer Vinylsulfon-Reaktivgruppe oder mit einer Gruppe $-CH_2-CH_2-Z$, worin Z = abspaltbare Gruppe, verwendet wird.

8. Verwendung von Porenmembranen gemäß Anspruch 1 zur Entsalzung und Aufkonzentrierung wässriger Lösungen.

9. Verwendung der Porenmembranen gemäß 1 zur Entsalzung und Aufkonzentrierung von Dispersionsmittel- und Farbstofflösungen oder -dispersionen.

10. Verwendung der Porenmembranen gemäß Anspruch 1 zur Entsalzung und Aufkonzentrierung von Lösungen oder Dispersionen von Reaktivfarbstoffen.

## Claims

1. Porous membranes with a mean porous diameter of > 5 nm at the surface, obtained by plasma or corona discharge onto porous membranes in the presence of gaseous substances. Characterized by the fact that under discharge conditions the gases do not form polymer films and that after plasma or corona discharge onto the surface of the membranes they are subjected to chemical modification with a mono or polyfunctional acylating agent.

2. Porous membranes as described in 1, characterized by the fact that the gases are non-metal oxides, non-metal hydrides and non-metal halides.

3. Porous membranes as described in 1, characterized by the fact that the plasma or corona discharge occurs in the presence of $NH_3$.

4. Porous membrane as described in 1, characterized by the fact that the porous membrane used as the starting material is placed directly in the plasma discharge zone, preferably between the electrodes.

5. Porous membrane as described in 1, characterized by the fact that a water-soluble dyestuff is used as the acylating agent.

6. Porous membranes as described in 1 or 5, characterized by the fact that mono or polyfunctional carboxylic acid or sulphonic acid halides or aromatic heterocyclic halogen compounds with at least one halogen atom that reacts with amino groups are used.

7. Porous membranes as described in 1 or 5, characterized by the fact that the acylating agent is a reactive dyestuff containing a vinyl sulphone reactive group or a $-CH_2-CH_2-Z$ group, where Z = a group that can be split off.

8. Use of porous membranes described in 1 for the desalination and concentration of aqueous solutions.

9. Use of porous membranes described in 1 for the desalination and concentration of solutions of dispersing agents and dyestuff solutions and dispersions.

10. Use of porous membranes described in 1 for the desalination and concentration of solutions or dispersions of reactive dyestuffs.

## Revendications

1. Membranes poreuses dont les pores ont en surface un diamètre moyen supérieur à 5 nm, obtenues par l'action de la décharge plasma ou corona en présence de substances gazeuses sur des membranes, se distinguant par le fait que les gaz ne forment pas eux-mêmes de couches polymères dans les conditions de décharge et que les membranes sont soumises à une modification chimique avec un agent d'acylation monofonctionnel ou polyfonctionnel après l'action de décharge plasma ou corona à la surface de la membrane.

2. Membranes conformes à la revendication 1, se distinguant par le fait que les gaz sont des oxydes, des hydrures et des halogénures non métalliques.

3. Membranes conformes à la revendication 1, se distinguant par le fait que la décharge plasma ou corona s'effectue en présence de $NH_3$.

4. Membrane conforme à la revendication 1, se distinguant par le fait que la membrane utilisée comme matière de base et devant être traitée est appliquée immédiatement dans la zone de décharge plasma, de préférence entre les électrodes.

5. Membrane conforme à la revendication 1, se distinguant par le fait que l'agent d'acylation utilisé est un colorant réactif soluble dans l'eau.

6. Membranes conformes à la revendication 1 ou 5, se distinguant par le fait que les agents d'acylation utilisés sont des halogénures d'acide sulfonique ou carbonique monofonctionnels ou polyfonctionnels, ou bien des composés halogénés aromatiques-hétérocycliques contenant au moins un atome d'halogène pouvant réagir avec les groupes d'amines.

7. Membranes conformes à la revendication 1 ou 5, se distinguant par le fait que l'agent d'acylation utilisé est un colorant réactif contenant un groupe réactif vinylsulfonique ou un groupe $-CH_2-CH_2-Z$ dans lequel Z est un groupe séparable.

8. Utilisation des membranes conformes à la revendication 1 pour le dessalement et la concentration de solutions aqueuses.

9. Utilisation des membranes conformes à la revendication 1 pour le dessalement et la concentration de solutions ou dispersions de colorants et d'agents de dispersion.

10. Utilisation des membranes conformes à la revendication 1 pour le dessalement et la concentration de solutions ou dispersions de colorants réactifs.

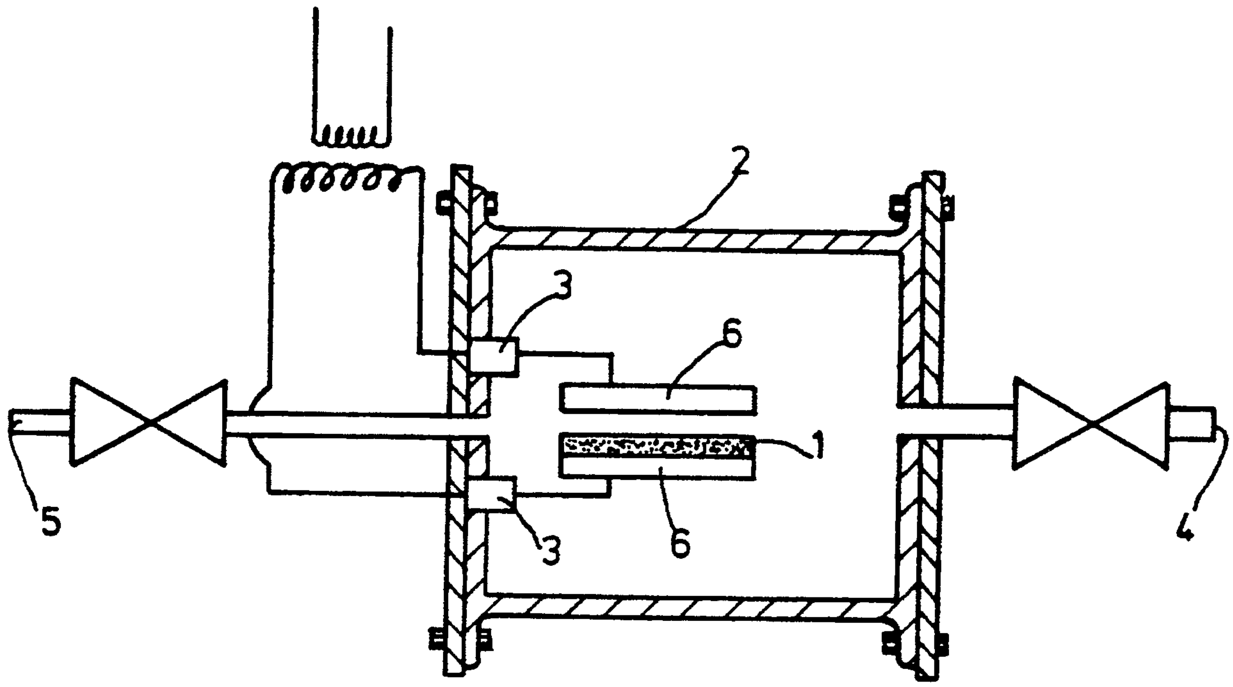


FIG.1